# EUROPÄISCHE PATENTSCHRIFT

(11) **EP 2 102 044 B1**
(45) Veröffentlichungstag und Bekanntmachung des Hinweises auf die Patenterteilung: **05.01.2011**
(21) Anmeldenummer: 08852283.4
(22) Anmeldetag: 30.10.2008
(51) Int. Cl.: B60S 3/06

(54) **BÜRSTENANORDNUNG FÜR EINE FAHRZEUGWASCHANLAGE**
BRUSH ARRANGEMENT FOR A CARWASH FACILITY
DISPOSITIF À BROSSE POUR UNE INSTALLATION DE LAVAGE AUTOMOBILE

(30) Priorität: 24.11.2007 DE 102007056701
(43) Veröffentlichungstag der Anmeldung: 23.09.2009
(73) Patentinhaber: WashTec Holding GmbH, 86153 Augsburg (DE)
(72) Erfinder: NOFFSINGER, Luke, Brighton, Colorado 80601 (US); BENDER, Harald, 86343 Königsbrunn (DE)
(74) Vertreter: Charrier, Rapp & Liebau
(86) Internationale Anmeldenummer: PCT/EP2008/064755
(87) Internationale Veröffentlichungsnummer: WO 2009/065715

(56) Entgegenhaltungen:
- US-A- 4 962 560
- US-A- 5 715 558
- US-A- 6 042 292
- US-A1- 2003 051 302

## Beschreibung

Die Erfindung betrifft eine Bürstenanordnung für eine Fahrzeugwachanlage nach dem Oberbegriff des Anspruchs 1.

Aus der US 5,715,558 ist eine gattungsgemäße Bürstenanordnung für eine Fahrzeugwaschanlage bekannt. Diese weist einen horizontal angeordneten Querträger auf, an dem ein Tragarm um eine vertikale Achse schwenkbar gelagert ist. Am freien Ende des Tragarms ist eine Gelenkverbindung an ihrem oberen Ende um eine horizontale Schwenkachse verschwenkbar angelenkt. Am unteren Ende der Gelenkverbindung ist ein Büstenträger für eine Waschbürste um eine horizontale Bürstenträgerschwenkachse schwenkbar angeordnet, wobei die horizontale Bürstenträgerschwenkachse senkrecht zur horizontalen Schwenkachse der Gelenkverbindung steht. An dem Bürstenträger ist eine Waschbürste mit einem Bürstenschaft drehbar angeordnet, welche von einem an dem Bürstenträger befestigten Motor angetrieben wird. Die horizontale Gelenkachse ermöglicht eine Schwenkbewegung der Gelenkverbindung vor und zurück längs der Fahrtrichtung des in die Fahrzeugwaschanlage einfahrenden Fahrzeugs. Die senkrecht zur Gelenkachse stehende horizontale Bürstenschwenkachse ermöglicht ein Ausschwenken des Bürstenträgers senkrecht zur Fahrtrichtung des in die Fahrzeugwaschanlage einfahrenden Fahrzeugs.

Diese bekannte Bürstenanordnung weist jedoch Nachteile beim Übergang der rotierenden Waschbürste von der Fahrzeugfront des zu reinigenden Fahrzeugs zu dessen Seitenbereichen und beim Übergang von den Seitenbereichen zur Heckpartie des Fahrzeugs auf. In diesen Übergangsbereichen liegt die rotierende Waschbürste nicht eng genug an den Ecken des Fahrzeugs an, weshalb diese Eckbereiche nicht zufrieden stellend gereinigt werden.

Hiervon ausgehend liegt der Erfindung die Aufgabe zugrunde, eine gattungsgemäße Bürstenanordnung so weiter zu bilden, dass mit dieser Bürstenanordnung auch die Eckbereiche der Fahrzeuge zufrieden stellend gereinigt werden können.

Gelöst wird diese Aufgabe mit einer Bürstenanordnung mit wenigsten einem horizontalen Querträger, an dem wenigstens ein Tragarm in horizontaler Ebene schwenkbar gelagert ist, wobei an einem Ende des Tragarms eine Gelenkverbindung vorgesehen ist, welche an ihrem oberen Ende um eine horizontale Gelenkachse an dem Tragarm schwenkbar angelenkt ist und an deren unterem Ende eine Waschbürste um ein horizontale Bürstenschwenkachse schwenkbar gelagert ist, wobei die Gelenkachse und die Bürstenschwenkachse einen Winkel von 30° bis 60° einschließen. Anders als bei der gattungsgemäßen Bürstenanordnung, bei der die Gelenkachse und die Bürstenschwenkachse senkrecht zu einander stehen, wird durch den kleineren Winkel zwischen der Gelenkachse und der Bürstenschwenkachse ermöglicht, dass die rotierende Waschbürste auch in den Eckbereichen des Fahrzeugs möglichst eng an der Fahrzeugoberfläche anliegt. Dies wird deshalb erreicht, weil der Tragarm in der Position, in der die Waschbürste einen Eckbereich des Fahrzeugs erreicht, etwa unter einem Winkel von 90° bis 120° zu dem horizontalen Querträger steht und weil beim Übergang der rotierenden Waschbürste von der Fahrzeugfront zu dessen Seitenflächen in dieser Position des Tragarms die an einem Bürstenträger hängende Waschbürste sowohl in Bewegungsrichtung des in die Fahrzeugwaschanlage einfahrenden Fahrzeugs als auch in Querrichtung dazu frei beweglich ist und sich so an die Fahrzeugoberfläche eng anlegen kann.

Bevorzugte Ausgestaltungen der Bürstenanordnung sind den Unteransprüchen zu entnehmen.

Nachfolgend wird die Erfindung anhand eines Ausführungsbeispiels unter Bezugnahme auf die begleitenden Zeichnungen näher erläutert. Die Zeichnungen zeigen:
- **Figur 1a:**: Draufsicht auf eine Fahrzeugwaschanlage mit einer erfindungsgemäßen Bürstenanordnung, wobei die Bürstenanordnung in einer Ausgangsstellung des Waschvorgangs gezeigt ist;
- **Figuren 1b-1m:**: Darstellung verschiedener Sequenzen in zeitlicher Abfolge bei der Durchführung des erfindungsgemäßen Reinigungsverfahrens, wobei die Figuren 1b, 1d und 1l die Fahrzeugwaschanlage in einer Seitenansicht, die Figuren 1c, 1j, 1k und 1m in einer Draufsicht, die Figuren 1f und 1g in einer Vorderansicht und die Figur 1e in einer perspektivischen Ansicht zeigen;
- **Figur 2:**: Detaildarstellung einer ersten Ausführungsform der Gelenkverbindung der erfindungsgemäßen Bürstenanordnung in einer perspektivischen Ansicht;
- **Figur3:**: Detaildarstellung einer zweiten Ausführungsform der erfindungsgemäßen Gelenkverbindung in einer perspektivischen Ansicht (Figur 3a), einer Seitenansicht (Figur 3b), einer Vorderansicht (3c) und einer Draufsicht (Figur 3d).

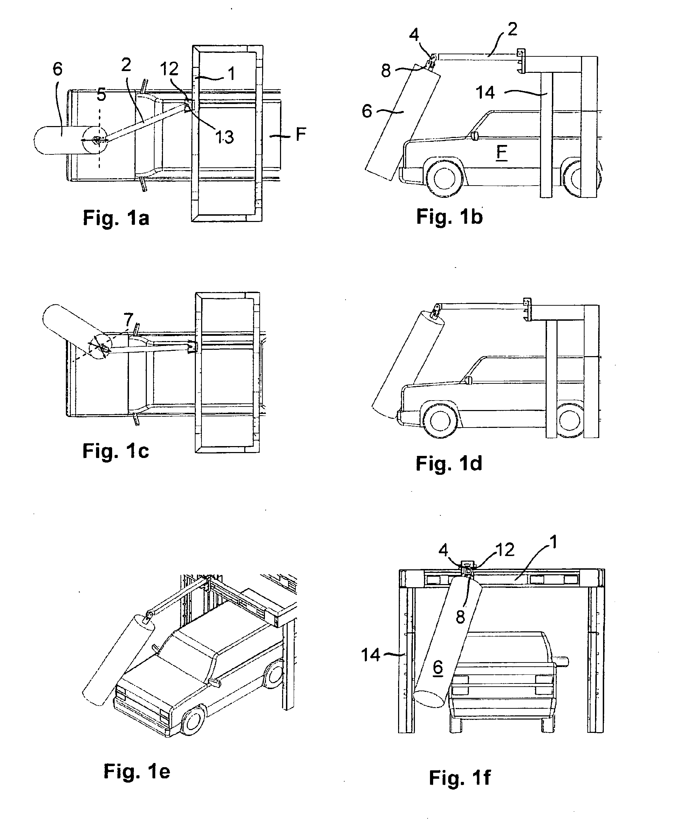

In den Figuren 1a und 1b ist eine Bürstenanordnung für eine Fahrzeugwaschanlage nach der Erfindung in einer Draufsicht zusammen mit einem in die Fahrzeugwaschanlage einfahrenden, zu reinigenden Fahrzeug F dargestellt. Die Bürstenanordnung umfasst einen horizontal angeordneten Querträger 1, der von in Figur 1b zeichnerisch dargestellten Vertikalpfeilern getragen wird. An dem Querträger 1 ist ein Tragarm 2 schwenkbar gelagert. Hierzu ist das eine Ende des Tragarms 2 an einem an dem Querträger 1 befestigten Schwenklager 12 angelenkt und um eine vertikale Tragarmachse 13 in horizontaler Ebene verschwenkbar. Das Schwenklager 12 ist an dem Querträger 1 von der Mittelachse (Längsachse) der Fahrzeugwaschanlage weg nach außen etwa um eine viertel Fahrzeugbreite versetzt. An dem freien Ende des Tragarms 2 ist eine Gelenkverbindung 4 schwenkbar angelenkt. Die Gelenkverbindung 4 ist aus der Seitenansicht der Bürstenanordnung der Figur 1b zu erkennen. Die Gelenkverbindung 4 ist an ihrem oberen Ende am Tragarm 2 über eine Gelenkachse 5 schwenkbar angelenkt. Am unteren Ende der Gelenkverbindung 4 ist ein Bürstenträger 8 schwenkbar gelagert und an dem Bürstenträger 8 ist drehbar eine Waschbürste 6 befestigt. Wenn kein Fahrzeug in der Fahrzeugwaschanlage steht, hängt die zylinderförmige Waschbürste, welche bevorzugt Waschelemente aus geschäumtem Kunststoff oder Textilmaterial aufweist, frei vertikal nach unten.

Eine Fahrzeugwaschanlage wird bevorzugt mit zwei oder mehr solcher Bürstenanordnungen ausgestattet, welche im Abstand zueinander in Längsrichtung der Fahrzeugwaschanlage angeordnet werden. Zur Reinigung des Fahrzeugs F wird dieses durch die Waschanlage in Vorwärts- oder auch in Rückwärtsrichtung gefahren. Alternativ dazu kann die Bürstenanordnung auch an fahrbaren Portalen angeordnet werden, welche dann in Längsrichtung am stehenden Fahrzeug vorbei bewegt werden.

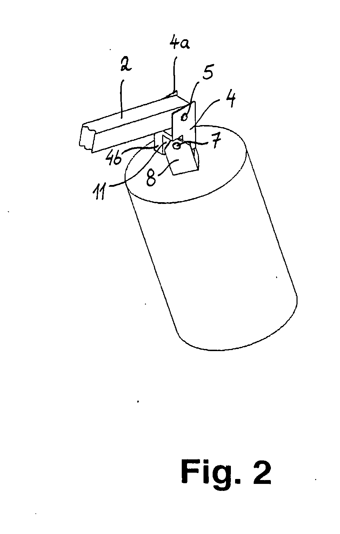

In Figur 2 ist eine erste Ausführungsform der Gelenkverbindung 4 im Detail in einer perspektivischen Ansicht gezeigt. In dieser Ausführungsform weist die Gelenkverbindung 4 ein U-förmiges Oberteil und ein einstückig daran angeordnetes Unterteil 4b auf, wobei das U-förmige Oberteil 4a das freie Ende des Tragarms 2 umgreift und über einen Bolzen dort schwenkbar um die Gelenkachse 5 angelenkt ist. Das Unterteil 4b weist schräg unter einem Winkel von 30° bis 60°, bevorzugt unter 45° zu den Schenkeln des U-förmigen Oberteils 4a verlaufende Anlenkflächen 11 auf, an denen das obere Ende des Bürstenträgers 8 über einen Bolzen um eine Bürstenschwenkachse 7 schwenkbar angelenkt ist. Die Gelenkachse 5, um welche die Gelenkverbindung 4 verschwenkbar ist, und die Bürstenschwenkachse 7, um welche der Bürstenträger 8 verschwenkbar ist, schließen auf diese Weise einen Winkel von 30° bis 60° zueinander ein. Bevorzugt ist die Gelenkverbindung so ausgestaltet, dass die Gelenkachse 5 mit der Bürstenschwenkachse 7 einen Winkel von 45° einschließt. Der Bürstenträger 8 ist an seiner Oberseite U-förmig ausgebildet und die U-Schenkel des Bürstenträgers 8 umgreifen das Unterteil 4b der Gelenkverbindung 4 und liegen an den Anlenkflächen 11 an, wo sie über einen Bolzen schwenkbar an dem Unterteil 4b der Gelenkverbindung 4 angelenkt sind.

Nachfolgend wird die Funktionsweise der vorbeschriebenen Bürstenanordnung bei der Durchführung eines Verfahrens zur Reinigung eines Fahrzeugs in einer Fahrzeugwaschanlage unter Bezugnahme auf die Figuren 1a bis 1m beschrieben:

In Figur 1a ist eine Fahrzeugaschanlage mit einer erfindungsgemäßen Bürstenanordnung in ihrer Grundstellung gezeigt. Der Tragarm 2 mit der daran hängenden Waschbürste 6 steht in seiner Grundstellung, in welcher er mit dem Querträger 1 einen Winkel von ca. 70-80° einschließt. Die Waschbürste hängt vor der Fahrzeugfront des zu reinigenden Fahrzeugs und ist quer zur Fahrtrichtung in etwa mittig oder im äußeren Drittel des Fahrzeugs angeordnet. Fährt ein zu reinigendes Fahrzeug F in die Fahrzeugwaschanlage ein, stößt es mit seiner Front an der hängenden Waschbürste 6 an und lenkt diese nach vorne in Bewegungsrichtung des Fahrzeugs aus (Figur 1b). Hierbei wird die Gelenkverbindung 4 um die horizontale Gelenkachse 5 nach vorne ausgeschwenkt. Bei weiterem Einfahren des Fahrzeugs F wandert die rotierende Waschbürste entlang der Front des Fahrzeugs F zu dessen Seitenbereich hin, wobei dabei der Bürstenträger 8, an dem die Waschbürste 6 angeordnet ist, um die Bürstenschwenkachse 7 leicht ausgeschwenkt wird (Figuren 1c und 1d). Die Verschwenkung des Bürstenträgers 8 um die Bürstenschwenkachse 7 erfolgt dabei unter einem Winkel von 30° bis 60° zur Gelenkachse 5. Erreicht die Waschbürste 6 den Eckebereich des Fahrzeugs F, wird der Bürstenträger 8 weiter um die Bürstenschwenkachse 7 nach außen hin ausgeschwenkt (Figur 1e). Bei der Bewegung der rotierenden Waschbürste 6 entlang der Front des Fahrzeugs F wird der Tragarm 2 aus seiner Grundstellung in die in Figur 1c ersichtliche Seitenstellung verschwenkt, in welcher der Tragarm 2 in etwa senkrecht zum Querträger 1 steht.

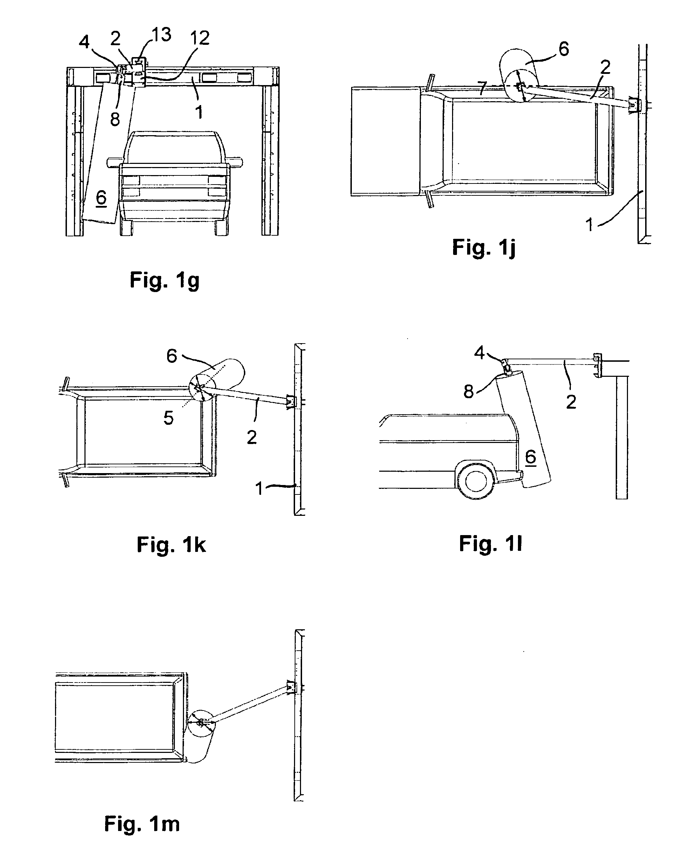

Bei weiterem Vorfahren des Fahrzeugs F gleitet die rotierende Waschbürste 6 um die vordere Ecke des Fahrzeugs, wobei die Waschbürste 6 dabei aufgrund ihrer Beweglichkeit um die Gelenkachse 5 und die unter dem Winkel von 30° bis 60° dazu stehende Bürstenschwenkachse 7 jederzeit eng an der Fahrzeugoberfläche auch im Eckbereich des Fahrzeugs anliegt (Figuren 1e und 1f). Wenn die Waschbürste 6 vollständig um die vordere Ecke des Fahrzeugs herumgelaufen ist, schließt der Tragarm mit dem Querträger dann einen Winkel von etwas mehr als 90° ein, bspw. ca. 120° (wie in Figur 1 j gezeigt) und die Waschbürste 6 gleitet bei weiterem Fortschreiten des Fahrzeugs F an dessen Seitenfläche entlang (Figuren 1g und 1j). Dabei kann der Bürstenträger 8 mit der daran rotierend angeordneten Waschbürste 6 in Querrichtung, also senkrecht zur Bewegungsrichtung des Fahrzeugs, um die Bürstenschwenkachse 7 verschwenken. Die rotierende Waschbürste 6 kann dadurch der Seitenkontur des Fahrzeugs folgen und liegt jederzeit entlang der gesamten Fahrzeuglänge bei weiterem Fortschreiten des Fahrzeugs durch die Waschanlage eng an der Fahrzeugseitenfläche an. Erreicht die rotierende Waschbürste 6 den hinteren Eckbereich des Fahrzeugs läuft die Waschbürste 6 um die hintere Ecke des Fahrzeugs, wobei die Gelenkverbindung 4 um die Gelenkachse 5 nach hinten und nach innen einschwenkt (Figur 1k). Gleichzeitig verschenkt der Tragarm 2 am Querträger 1 zurück in seine zentrale Position, während die Waschbürste 6 am Heck des Fahrzeugs nach innen entlang gleitet. Beim Entlanggleiten der rotierenden Waschbürste am Fahrzeugheck kann die an der Gelenkverbindung 4 hängende Waschbürste 6 in Fahrtrichtung des Fahrzeugs vor und zurück pendeln und sich dadurch der Heckkontur des Fahrzeugs anpassen (Figur 1m). Sobald die Waschbürste 6 den Kontakt zum Heck des weiterfahrenden Fahrzeugs F verloren hat, schwenkt die Gelenkverbindung 4 um die Gelenkachse 5 und der Bürstenträger 8 um die Bürstenschwenkachse 7 in ihre Ausgangsstellung zurück, in der die Waschbürste 6 in vertikaler Richtung frei nach unten hängt.

Durch die Stellung der Gelenkachse 5 und der Bürstenschwenkachse 7 zueinander ist während des gesamten Bewegungsablaufs der rotierenden Waschbürste 6 um die vertikalen Fahrzeugoberflächen gewährleistet, dass die Waschbürste 6 sowohl vor und zurück als auch seitlich zur Bewegungsrichtung des durch die Waschanlage fahrenden Fahrzeugs ausschwenken kann, wobei dies insbesondere auch in den Eckbereichen des Fahrzeugs durch die erfindungsgemäße Stellung der Gelenkachse 5 und der Bürstenschwenkachse 7 unter einem Winkel von 30° bis 60° gewährleistet ist.

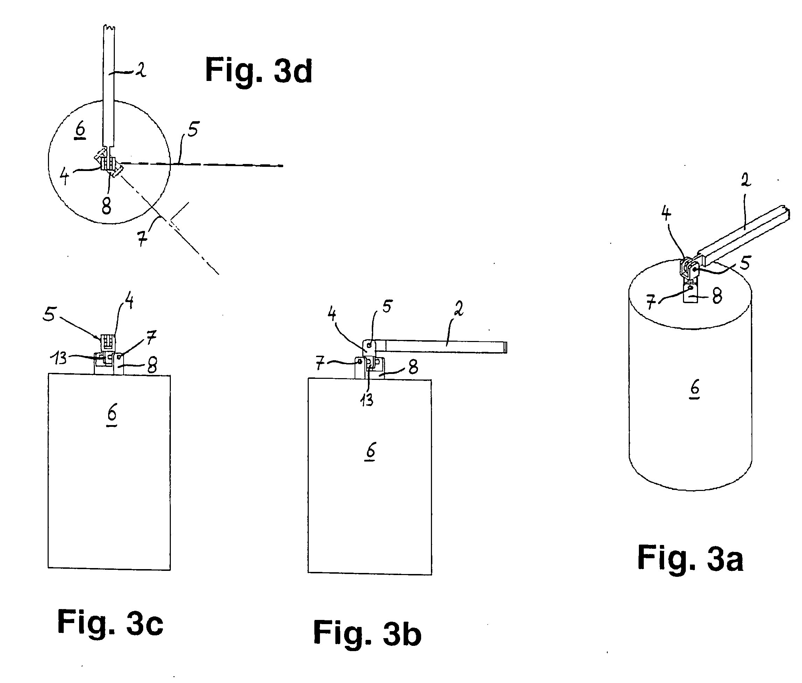

In Figur 3 ist eine zweite Ausführungsform der Gelenkverbindung 4 gezeigt, welche sich von der Ausführungsform von Figur 2 im Wesentlichen nur durch die Ausgestaltung des Unterteils 4b der Gelenkverbindung 4 unterscheidet. Das Untereil 4b ist bei dieser Ausführungsform als Steg 13 ausgebildet, der an der Unterseite des Oberteils 4a angeformt ist und zur Gelenkachse 5 unter einem Winkel von 30° bis 60° steht. In dem Steg 13 ist eine zentrale Bohrung vorgesehen, durch welche ein Gelenkzapfen greift. Durch diesen Gelenkzapfen ist das U-förmige Oberteil des Bürstenträgers 8 am Steg 13 um die Bürstenschwenkachse 7 schwenkbar angelenkt. Durch die Schrägstellung des Stegs 13 bezüglich der Gelenkachse 5 stehen auch bei diesem Ausführungsbeispiel die Gelenkachse 5 und die Bürstenschwenkachse 7 unter einem Winkel von 30° bis 60° zueinander.

## Patentansprüche

1. Bürstenanordnung für eine Fahrzeugwaschanlage mit wenigstens einem horizontalen Querträger (1), an dem mindestens ein Tragarm (2) in horizontaler Ebene schwenkbar gelagert ist, wobei an einem Ende des Tragarm (2) eine Gelenkverbindung (4) vorgesehen ist, welche an ihrem oberen Ende um eine horizontale Gelenkachse (5) an dem Tragarm (2) schwenkbar angelenkt ist und an deren unterem Ende eine Waschbürste (6) um eine horizontale Bürstenschwenkachse (7) schwenkbar gelagert ist, **dadurch gekennzeichnet, dass** die Gelenkachse (5) und die Bürstenschwenkachse (7) einen Winkel von 30° bis 60° einschließen.

2. Bürstenanordnung nach Anspruch 1, **dadurch gekennzeichnet, dass** die Waschbürste (6) an einem Bürstenträger (8) drehbar gelagert ist, wobei der Bürstenträger (8) am unteren Ende der Gelenkverbindung (4) um die Bürstenschwenkachse (7) schwenkbar angelenkt ist.

3. Bürstenanordnung nach Anspruch 1 o der 2, **dadurch gekennzeichnet, dass** die Gelenkverbindung (4) ein U-förmiges Oberteil (4a) und ein einstückig daran angeordnetes Unterteil (4b) aufweist, wobei das U-förmige Oberteil (4a) das freie Ende des Tragarms umgreift und über einen Bolzen (10) dort schwenkbar angelenkt ist.

4. Bürstenanordnung nach Anspruch 3, **dadurch gekennzeichnet, dass** das Unterteil (4b) der Gelenkverbindung (4) schräg unter einem Winkel von 30° bis 60° zu den Schenkeln des U-förmigen Oberteils (4a) verlaufende Anlenkflächen (11) aufweist, an denen das obere Ende des Bürstenträgers (8) über einen Bolzen (12) um die Bürstenschwenkachse (7) schwenkbar angelenkt ist.

5. Bürstenanordnung nach Anspruch 4, **dadurch gekennzeichnet, dass** das obere Ende des Bürstenträgers (8) U-förmig ausgebildet ist, wobei die U-Schenkel das Unterteil (4b) der Gelenkverbindung (4) an den Anlenkflächen (11) anliegend umgreifen.

6. Bürstenanordnung nach einem der voranstehenden Ansprüche, **dadurch gekennzeichnet, dass** Dämpfer zur Dämpfung der Schwenkbewegung der Gelenkverbindung (4) und/oder der Waschbürste (6) vorgesehen sind.

7. Verfahren zur Reinigung eines Fahrzeugs in einer Fahrzeugwaschanlage mit einer Bürstenanordnung nach einem der voranstehenden Ansprüche mit folgenden Sequenzen:
a. Einfahren eines Fahrzeugs in die Fahrzeugwaschanlage, wobei die Waschbürste (6) frei an der sich in ihrer Ausgangsstellung befindlichen Gelenkverbindung (4) vertikal nach unten hängt und rotiert und der Tragarm sich in einer zentralen Position am Querträger (1) befindet;
b. Ausschwenken der horizontalen Gelenkachse (5) nach vorne in Bewegungsrichtung des Fahrzeugs sobald das Fahrzeug mit seiner Front an die Waschbürste (6) stößt, wobei hierdurch die Waschbürste (6) aus ihrer vertikalen Stellung schräg nach vorne bewegt wird;
c. bei weiterem Einfahren des Fahrzeugs Verschwenken des Tragarms am Querträger aus einer zentralen Position in eine seitliche Randposition, bis die Waschbürste (6) den seitlichen Rand der Front des Fahrzeugs erreicht hat und gleichzeitig beginnendes Ausschwenken der an der Front des Fahrzeugs anliegenden Waschbürste (6) um die Bürstenschwenkachse (7) nach außen zur Seitenfläche des Fahrzeugs hin, wobei die Bürstenschwenkachse (7) mit der Gelenkachse (5) einen Winkel von 30° bis 60° einschließt,
d. bei weiterem Einfahren des Fahrzeugs Herumlaufen der Waschbürste (6) um die vordere Ecke des Fahrzeugs, wobei der Tragarm hierbei in seiner seitlichen Randposition verbleibt und sich die Waschbürste an die Seitenfläche des Fahrzeugs anlegt, wobei sie sich um die Bürstenschwenkachse (7) in einer Richtung senkrecht zur Bewegungsrichtung des Fahrzeugs verschwenken und so der Seitenkontur des Fahrzeugs folgen kann, während sich das Fahrzeug weiter bewegt;
e. bei Erreichen des Hecks des Fahrzeugs Herumlaufen der Waschbürste (6) um die hintere Ecke des Fahrzeugs, wobei der Tragarm zurück in seine zentrale Position am Querträger läuft und die Waschbürste (6) dabei am Heck des Fahrzeugs entlang gleitet;
f. Zurückschwenken der Gelenkverbindung (4) um die Gelenkachse (5) und der Waschbürste (6) um die Bürstenschwenkachse (7) in ihre Ausgangsstellungen, sobald die Waschbürste den Kontakt zum Heck des Fahrzeugs verloren hat.

## Claims

1. Brush arrangement for a vehicle washing installation with at least one horizontal crossmember (1) on which is mounted at least one supporting arm (2) pivotable in a horizontal plane, with at one end of the supporting arm (2) a hinged joint (4) which at its upper end is articulated to the supporting arm (2) pivotable about a horizontal hinge axis (5) and at its lower end is provided with a washing brush (6) which is mounted pivotable about a horizontal brush pivot axis (7), **characterised in that** the hinge axis (5) and the brush pivot axis (7) enclose an angle of 30° to 60°.

2. Brush arrangement according to claim 1, **characterised in that** the washing brush (6) is mounted rotatable on a brush carrier (8), the brush carrier (8) being articulated to the lower end of the hinged joint (4) pivotable about the brush pivot axis (7).

3. Brush arrangement according to claim 1 or 2, **characterised in that** the hinged joint (4) exhibits a U-shaped upper part (4a) and a lower part (4b) arranged in one piece on it, the U-shaped upper part (4a) embracing the free end of the supporting arm and being articulated there pivotable by means of a pin (10).

4. Brush arrangement according to claim 3, **characterised in that** the lower part (4b) of the hinged joint (4) exhibits articulation surfaces (11) which run obliquely at an angle of 30° to 60° to the limbs of the U-shaped upper part (4a) and to which the upper end of the brush carrier (8) is articulated pivotable about the brush pivot axis (7) by means of a pin (12).

5. Brush arrangement according to claim 4, **characterised in that** the upper end of the brush carrier (8) is U-shaped, the U limbs embracing and bearing on the lower part (4b) of the hinged joint (4) at the articulation surfaces (11).

6. Brush arrangement according to one of the preceding claims, **characterised in that** dampers are provided to damp the pivoting movement of the hinged joint (4) and/or the washing brush (6).

7. Method for cleaning a vehicle in a vehicle washing installation with a brush arrangement according to one of the preceding claims with the following sequences:
a. a vehicle is driven into the vehicle washing installation, with the washing brush (6) hanging vertically downwards freely on the hinged joint (4) in its starting position and rotating and with the supporting arm in a central position on the crossmember (1);
b. the horizontal hinge axis (5) is swung out towards the front in the direction of movement of the vehicle as soon as the vehicle bumps into the washing brush (6) with its front end, this causing the washing brush (6) to be moved obliquely forwards out of its vertical position;
c. as the vehicle is driven in further, the supporting arm is pivoted on the crossmember from a central position into a side edge position until the washing brush (6) has reached the side edge of the front of the vehicle and at the same time the washing brush (6) bearing on the front of the vehicle starts to swing out around the brush pivot axis (7) in an outwards direction to the side surface of the vehicle, the brush pivot axis (7) enclosing an angle of 30° to 60° with the hinge axis (5);
d. as the vehicle is driven in further, the washing brush (6) is run around the front corner of the vehicle, with the supporting arm remaining in its side edge position during this process and the washing brush bearing on the side surface of the vehicle so that it is able to pivot around the brush pivot axis (7) in a direction perpendicular to the direction of movement of the vehicle and thus follow the side contour of the vehicle while the vehicle moves further;
e. on reaching the rear of the vehicle, the washing brush (6) runs around the rear corner of the vehicle, and the supporting arm runs back into its central position on the crossmember and in the process the washing brush (6) slides along the rear of the vehicle;
f. the hinged joint (4) is swung back around the hinge axis (5) and the washing brush (6) is swung back around the brush pivot axis (7) into their starting positions as soon as the washing brush loses contact with the rear of the vehicle.

## Revendications

1. Dispositif à brosse pour une installation de lavage automobile avec au moins une traverse (1) horizontale, sur laquelle est logé de manière à pouvoir pivoter au moins un bras porteur (2) dans un plan horizontal, sur une extrémité du bras porteur (2) étant prévu une assemblage articulé (4) qui est articulé de manière à pouvoir pivoter sur son extrémité supérieure autour d'un axe d'articulation (5) horizontal sur le bras porteur (2) et sur l'extrémité inférieure duquel est logée de manière à pouvoir pivoter une brosse de lavage (6) autour d'un axe de pivotement de brosse (7) horizontal, **caractérisé en ce que** l'axe d'articulation (5) et l'axe de pivotement de brosse (7) forment un angle compris entre 30 et 60°.

2. Dispositif à brosse selon la revendication 1, **caractérisé en ce que** la brosse de lavage (6) est logée de manière à pouvoir tourner sur un porte-brosse (8), le porte-brosse (8) étant articulé de manière à pouvoir pivoter sur l'extrémité inférieure de l'assemblage articulé (4) autour de l'axe de pivotement de brosse (7).

3. Dispositif à brosse selon la revendication 1 ou 2, **caractérisé en ce que** l'assemblage articulé (4) présente une partie supérieure en forme de U (4a) et une partie inférieure (4b) disposée d'un seul tenant dessus, la partie supérieure en forme de U (4a) enveloppant l'extrémité libre du bras porteur et étant articulée de manière à pouvoir y pivoter par le biais d'un boulon (10).

4. Dispositif à brosse selon la revendication 3, **caractérisé en ce que** la partie inférieure (4b) de l'assemblage articulé (4) présente des surfaces articulées s'étendant en biais sous un angle compris entre 30 et 60° par rapport aux branches de la partie supérieure en forme de U (4a), sur lesquelles l'extrémité supérieure du porte-brosse (8) est articulée de manière à pouvoir pivoter par le biais d'un boulon (12) autour de l'axe de pivotement de brosse (7).

5. Dispositif à brosse selon la revendication 4, **caractérisé en ce que** l'extrémité supérieure du porte-brosse (8) est réalisée en forme de U, les branches en U enveloppant la partie inférieure (4b) de l'assemblage articulé (4) tout en reposant sur les surfaces articulées (11).

6. Dispositif à brosse selon l'une quelconque des revendications précédentes, **caractérisé en ce que** des amortisseurs sont prévus pour l'amortissement du mouvement de pivotement de l'assemblage articulé (4) et/ou de la brosse de lavage (6).

7. Procédé de nettoyage d'un véhicule dans une installation de lavage de véhicule avec un dispositif à brosse selon l'une quelconque des revendications précédentes avec les séquences suivantes :
a. rentrée d'un véhicule dans l'installation de lavage de véhicule, la brosse de lavage (6) étant suspendue verticalement vers le bas librement sur l'assemblage articulé (4) se trouvant dans sa position de départ et tournant et le bras porteur se trouvant dans une position centrale sur la traverse (1) ;
b. pivotement de l'axe d'articulation horizontal (5) vers l'avant dans le sens de déplacement du véhicule dès que le véhicule bute avec son avant contre la brosse de lavage (6), la brosse de lavage (6) étant déplacée par là-même de sa position verticale en biais vers l'avant ;
c. lorsque le véhicule rentre encore, pivotement du bras porteur sur la traverse d'une position centrale à une position de bord latérale jusqu'à ce que la brosse de lavage (6) ait atteint le bord latéral de l'avant du véhicule et pivotement commençant en même temps de la brosse de lavage (6) reposant sur l'avant du véhicule autour de l'axe de pivotement de brosse (7) vers l'extérieur vers la surface latérale du véhicule, l'axe de pivotement de brosse (7) formant avec l'axe d'articulation (5) un angle compris entre 30 et 60 °,
d. lorsque le véhicule rentre encore, la brosse de lavage (6) fait le tour du coin avant du véhicule, le bras porteur restant à cette occasion dans sa position de bord latérale et la brosse de lavage reposant sur la surface latérale du véhicule, celle-ci pouvant pivoter autour de l'axe de pivotement de brosse (7) dans une direction perpendiculaire au sens de déplacement du véhicule et pouvant suivre ainsi le contour latéral du véhicule pendant que le véhicule continue de se déplacer ;
e. lors de l'atteinte de l'arrière du véhicule, la brosse de lavage (6) fait le tour du coin arrière du véhicule, le bras porteur revenant dans sa position centrale sur la traverse et la brosse de lavage (6) glissant le long de l'arrière du véhicule ;
f. repivotement de l'assemblage articulé (4) autour de l'axe d'articulation (5) et de la brosse de lavage (6) autour de l'axe de pivotement de brosse (7) dans leurs positions de départ dès que la brosse de lavage a perdu le contact avec l'arrière du véhicule.
